# EUROPÄISCHE PATENTSCHRIFT

(11) **EP 2 394 880 B1**
(45) Veröffentlichungstag und Bekanntmachung des Hinweises auf die Patenterteilung: **07.08.2013**
(21) Anmeldenummer: 10006667.9
(22) Anmeldetag: 28.06.2010
(51) Int. Cl.: B61D 17/22, B60D 5/00

(54) **Seitenwandabdeckung**
Side wall cover
Recouvrement de paroi latérale

(30) Priorität: 09.06.2010 EP 10005937
(43) Veröffentlichungstag der Anmeldung: 14.12.2011
(73) Patentinhaber: Hübner GmbH, 34123 Kassel (DE)
(72) Erfinder: Hübner, Reinhard, 34130 Kassel (DE); Benkhoff, Hermann, 37115 Duderstadt (DE); Dietrich, Marcus, 34379 Calden (DE); Rätz, Werner, 34576 Homberg (DE)
(74) Vertreter: Walther, Robert

(56) Entgegenhaltungen:
- DE-U1-202009 004 538

## Beschreibung

Die Erfindung betrifft eine Seitenwandabdeckung auf der Innenseite eines Balges eines Übergangs zwischen zwei gelenkig miteinander verbundenen Fahrzeugen, wobei die Seitenwandabdeckung durch zwei Haltevorrichtungen gehalten ist, wobei jeweils eine Haltevorrichtung an dem Wagenkasten eines Fahrzeugs angeordnet ist.

Aus der DE 20 2009 004 538 A1 ist eine Vorrichtung auf der Außenseite eines Balges eines Gelenkfahrzeugelements, wobei zur außenhautbündigen Überbrückung des Abstandes zwischen den Fahrzeugen des Gelenkfahrzeugs ein flächiges Spannelement vorgesehen ist. Zur Aufnahme des flächigen Spannelements sind an den Stirnseiten der Fahrzeuge Stangen angeordnet, um die herum das Spannelement geführt ist. Auf der Innenseite sind Federn vorgesehen, die für eine Verlängerung oder Verkürzung des Spannelements bei Kurvenfahrt sorgen.

Eine Innenwandverkleidung eines Übergangs in Form einer Seitenwandabdeckung ist erforderlich, um die Bälge vor Zerstörung durch Fahrgäste zu schützen. Das heißt, eine solche Seitenwandabdeckung in Form einer Innenwandverkleidung dient als Vandalismusschutz. Darüber hinaus hat eine solche Seitenwandabdeckung allerdings auch die Funktion, den Übergang als solchen optisch aufzuwerten und zwar dadurch, dass der Balg, der Teil des Überganges ist, seitlich zumindest abgedeckt wird.

Ein Übergang mit einer Innenverkleidung ist beispielsweise aus der DE A 3639898 bekannt. Die aus dieser Schrift bekannte Innenverkleidung zeichnet sich durch ein inneres und zwei äußere Verkleidungselemente aus, wobei das innere Verkleidungselement bei Kurvenfahrt des Zuges sich relativ zu den äußeren Verkleidungselementen verschiebt. Eine solche Konstruktion ist aufwendig und auch teuer.

Aus der EP 0625459 A1 ist eine Seitenwandabdeckung der eingangs genannten Art bekannt. Diese Seitenwandabdeckung zeichnet sich im Einzelnen dadurch aus, dass die Seitenwandabdeckung als Platte ausgebildet ist, die in sich elastisch nachgiebig und um die Hochachse in Richtung der Mitte des Übergangs gewölbt ausgebildet ist. Die Halterung zur Aufnahme der Seitenwandabdeckung zeichnet sich im Einzelnen durch zwei beabstandet zueinander an den jeweiligen Wagenkästen angeordnete Federscharniere aus, die mit einem teilkreisartigen, walzenförmigen Element in Verbindung stehen, wobei auf dem walzenförmigen Element ein elastisches Zwischenglied aus einem Elastomer angeordnet ist, das schlussendlich mit der Seitenwandabdeckung in Verbindung steht. Hierbei ist ein Stahlseil vorgesehen, das die beiden Enden der Seitenwandabdeckung zusammenzieht und auf diese Weise eine Vorwölbung der Seitenwandabdeckung in Richtung auf die Innenseite des Übergangs bewirkt. Durch diese Vorwölbung wird sichergestellt, dass bei Kurvenfahrt, das heißt bei Knickung der Fahrzeuge die Seitenwand tatsächlich in das Innere des Übergangs ausbaucht. Nachteilig hierbei ist, dass aufgrund der Vorspannung der Seitenwandabdeckung, in Richtung auf das Innere des Fahrzeugs zu, die lichte Durchgangsbreite vermindert ist. Eine weitere Verminderung der lichten Durchgangsbreite findet dann statt, wenn das Gelenkfahrzeug eine Kurve durchfährt und auf der Innenseite der Kurve die dort befindliche Seitenwandabdeckung noch weiter in das Innere des Durchganges ausbaucht.

Die der Erfindung zugrunde liegende Aufgabe besteht demzufolge darin, eine Seitenwandabdeckung der eingangs genannten Art bereitzustellen, bei der, insbesondere bei Kurvenfahrt, eine weitere Verminderung der lichten Durchgangsbreite des Übergangs nicht erfolgt.

Zur Lösung der Aufgabe wird erfindungsgemäß vorgeschlagen, dass die Haltevorrichtung die Seitenwandabdeckung bei Verkürzung der Länge der Seitenwand bei Kurvenfahrt aufrollbar aufnimmt. Betrachtet man in diesem Zusammenhang noch einmal den Stand der Technik gemäß der bereits zitierten EP 0625459 A1, so ergibt sich hieraus, dass bei Kurvenfahrt auf der Kurveninnenseite die Seitenwandabdeckung sich von dem trommelförmigen Körper abwickelt, wobei im Gegensatz dazu bei der Erfindung vorgesehen ist, dass die Haltevorrichtung die Seitenwandabdeckung aufrollbar aufnimmt. Das heißt, durch die Aufrollbarkeit wird gewährleistet, dass die Seitenwandabdeckung nicht mehr auf die Innenseite des Überganges zu auswölbt, sondern vielmehr der auf der Innenseite bei Kurvenfahrt entstehende Überschuss an Seitenwandabdeckung durch die Rollbewegung der Haltevorrichtung aufgenommen wird.

Vorteilhafte Merkmale und Ausgestaltungen zu der Erfindung ergeben sich aus den Unteransprüchen.

So ist insbesondere vorgesehen, dass die Haltevorrichtung eine Achse aufweist, die einen Rollkörper hält, der relativ zur Achse verdrehbar von der Achse aufnehmbar ist. Der Rollkörper selbst dient der Aufnahme der Seitenwandabdeckung. In diesem Zusammenhang ist vorgesehen, dass der Rollkörper nach Art einer Rohrschale ausgebildet ist und parallel zur Achse verlaufend durch die Achse gehalten ist. Um sicherzustellen, dass durch den Rollkörper die Seitenwandabdeckung aufrollbar bzw. auch aufwickelbar ist, wie dies bei Kurvenfahrt erforderlich ist, wenn sich auf der Kurveninnenseite die Seitenwand in Längsrichtung verkürzt, ist vorgesehen, dass der Rollkörper durch mindestens eine Spiral- oder Schenkelfeder verdrehbar mit der Achse in Verbindung steht. Das heißt, dass der Rollkörper durch die mindestens eine Spiral- oder Schenkelfeder derart vorgespannt ist, dass bei einer Entlastung der Seitenwand, das heißt bei einer Verkürzung der Seitenwand, die Seitenwand durch den Rollkörper aufgrund der Federkraft aufgewickelt wird.

Die Seitenwandabdeckung ist vorteilhaft am Rollkörper klemmbar befestigt. Hierdurch wird erreicht, dass die aufrollfähige Seitenwand nicht durch irgendwelche Bohrungen oder sonstige Eingriffe in die Struktur der Seitenwand geschwächt wird. Dies ist insbesondere von Interesse, wenn die Seitenwandabdeckung einen Festigkeitsträger aufweist, beispielsweise in Form eines Glasfasergewebes, das mit Kunstharz getränkt ist.

Es wurde bereits zuvor erwähnt, dass der Rollkörper unter der Last einer Spiral- oder Schenkelfeder derart steht, dass die Seitenwandabdeckung durch die Federkraft der Spiral- oder Schenkelfeder vorgespannt gehalten ist, mit dem Ziel, die Seitenwandabdeckung bei Kurvenfahrt auf den Rollkörper aufzuwickeln und entsprechend auf der gegenüberliegenden Seite abzuwickeln. Im Zusammenhang mit der Anordnung der Federn ist nach einem weiteren Merkmal der Erfindung vorgesehen, dass der Rollkörper endseitig jeweils zwei in der Breite der Spiralfeder beabstandet angeordnete Teller aufweist, zwischen denen die Spiralfeder gelagert ist, wobei die Schenkel- oder Spiralfeder mit ihrem einen Ende an der Achse und mit ihrem anderen Ende an dem Rollkörper angelenkt ist. Die Verbindung der Achse mit dem Rollkörper erfolgt durch die zu beiden Enden der Achse angeordneten Teller.

Bekannt ist, dass bei gelenkig miteinander verbundenen Fahrzeugen der die beiden Fahrzeuge verbindende Übergang den unterschiedlichsten Bewegungsarten ausgesetzt ist. So muss der Übergang in der Lage sein, Knick-, Nick- und Wankbewegungen bzw. überlagerten Bewegungsformen zwischen Wank-, Nick- und Knickbewegungen nachgeben zu können. Insbesondere bei Nickbewegungen wird es so sein, dass die gelenkig miteinander verbundenen Fahrzeuge auch einen Höhenversatz zueinander aufweisen. Um einen solchen Höhenversatz zu ermöglichen, wird nach einem weiteren Merkmal der Erfindung vorgeschlagen, dass zumindest von der einen Haltevorrichtung die Seitenwandabdeckung in Längsrichtung der Haltevorrichtung verschieblich am Wagenkasten befestigt ist. Hieraus wird deutlich, dass die Seitenwandabdeckung in der Höhe verspringen kann, so wie es erforderlich ist, wenn z. B. ein Fahrzeug durch eine Senke oder über eine Kuppe fährt.

In diesem Zusammenhang ist bereits erwähnt worden, dass die Haltevorrichtung eine Achse aufweist, wobei an der Achse mindestens ein Arm zur Verbindung mit dem Wagenkasten angeordnet ist. Der Arm besitzt hierbei ein Auge für die verschiebliche Aufnahme der Achse, um eben eine Längsverschiebung der Seitenwandabdeckung bei einem Höhenversatz der Fahrzeuge relativ zueinander zu ermöglichen.

Um nun sicherzustellen, dass die Seitenwandabdeckung wieder in ihrer Ausgangslage zurückgelangen kann, ist nach einem weiteren Merkmal der Erfindung vorgesehen, dass die Achse durch den mindestens einen Arm entgegen der Kraft mindestens einer Feder verschieblich gehalten ist.

An anderer Stelle wurde bereits darauf hingewiesen, dass zu beiden Enden der Rollkörper zur Verbindung mit der Achse zwei Teller aufweist, wobei zwischen den beiden Tellern eine Spiral- oder Schenkelfeder angeordnet ist, die zum einen dafür sorgt, dass die Seitenwandabdeckung vorgespannt ist, aber auch dafür sorgen, dass sich bei einer Verkürzung der Seitenwandabdeckung die Seitenwandabdeckung auf den Rollkörper der Halterung aufrollt. Dies geschieht dadurch, dass diese Spiral- oder Schenkelfeder einerseits an der Achse und andererseits an dem Rollkörper angelenkt ist. Die Stärke der Spiral- oder Tellerfeder und mithin die auf die Seitenwand einwirkende Spannung sind so groß, dass auch seitliche Kräfte bis über 50 kg, etwa durch sich anlehnende Personen aufgenommen werden können. Bereits ebenfalls wurde erwähnt, dass die Seitenwandabdeckung in der Lage sein sollte, einem Höhenversatz der Fahrzeuge beispielsweise bei Nickbewegungen nachgeben zu können. Hierbei wurde ebenfalls darauf hingewiesen, dass die Achse durch mindestens einen Arm entgegen der Kraft mindestens Feder verschieblich gehalten wird. In diesem Zusammenhang ist im Einzelnen des Weiteren vorteilhaft vorgesehen, dass die auf der Achse einander zugewandten Teller jeweils als Anschlag für eine Druckfeder dienen, wobei die jeweilige Druckfeder am anderen Ende an dem jeweiligen Arm anliegt, durch den die Haltevorrichtung am Wagenkasten befestigt ist. Hieraus wird deutlich, dass die Achse relativ zu den beiden Armen, mit welchen die Achse an dem jeweiligen Wagenkasten befestigt ist, zu beiden Richtungen entgegen der Kraft der jeweiligen Feder verschieblich ist. Das heißt, durch die Federn wird sichergestellt, dass die Achse in jedem Fall immer ihre Ausgangsstellung einnimmt, mithin auch die Seitenwandabdeckung jeweils in ihre Ausgangsstellung zurückgelangt.

An anderer Stelle wurde bereits darauf hingewiesen, dass der Rollkörper als Rohrschale ausgebildet ist. In diesem Zusammenhang ist nach einem weiteren Merkmal der Erfindung der Arm zur Befestigung der Haltevorrichtung am Wagenkasten gekröpft ausgebildet, um eine Drehbewegung des Rollkörpers um die Achse herum zu ermöglichen. Das heißt, das Maß der Drehung ist insofern abhängig von dem Grad der Kröpfung des Arms und davon, welchen Öffnungswinkel die Rohrschale aufweist, d. h., um wie viel Grad die Rohrschale geöffnet ist, mithin wie groß das Fenster in der Rohrschale ist.

Bei der zuvor beschriebenen Ausführungsform ist es so, dass der Drehwinkel zum Aufrollen der Seitenwandabdeckung im Wesentlichen dadurch beschränkt ist, dass die Arme, die die Haltevorrichtung am Wagenkasten halten, in dem als Rohrschale ausgebildeten Rollkörper angeordnet sind.

Gegenstand der Erfindung ist nun eine Variante, wobei die Achse zumindest an einem Ende, vorzugsweise an beiden Enden, über den Rollkörper übersteht, und wobei dieser überstehende Achsenabschnitt eine Feder, insbesondere eine Druckfeder aufweist, wobei sich die Druckfeder einerseits an einem Arm und andererseits an dem Teller des Rollkörpers abstützt. Vorteilhaft an dieser Gestaltung ist, dass der Drehwinkel des Rollkörpers nicht eingeschränkt ist, mithin die Seitenwandabdeckung auch um 360 ° oder mehr auf den Rollkörper aufgewickelt werden kann.

Wie bereits an anderer Stelle erläutert, treten bei einem Gelenkfahrzeug die unterschiedlichsten Bewegungsarten auf. Dies sind Nick-, Wank- und Knickbewegungen. Knickbewegungen treten insbesondere auf, wenn das Fahrzeug über eine Kuppe oder durch eine Senke fährt. Es ist unmittelbar einsichtig, dass die Seitenwandabdeckung im Bereich ihrer Ober- oder ihrer Unterseite, je nachdem, ob über eine Kuppe oder durch eine Senke gefahren wird, gespannt wird. Wird an der einen z. B. unteren Seite die Seitenwandabdeckung gezogen, dann wird sie auch auf der anderen, gegenüberliegenden z. B. oberen Seite gestaucht. Um nun zu verhindern, dass derartige Bewegungen bzw. Kraftbeanspruchungen auf Dauer zu einer Beschädigung der Seitenwandabdeckung führen, ist nach einem besonderen Merkmal der Erfindung vorgesehen, dass der Arm in Achsrichtung des Arms elastisch nachgiebig, insbesondere federnd nachgiebig am Wagenkasten gelagert ist. Wie bereits an anderer Stelle erläutert, dient der Arm der Befestigung der Haltevorrichtung an dem Wagenkasten des Fahrzeugs. Durch eine insbesondere federnd elastische Lagerung des Arms in Achsrichtung des Arms an dem Wagenkasten wird erreicht, dass Zugbeanspruchungen im oberen Bereich der Seitenwandabdeckung bzw. korrespondierend hierzu auftretende Druckbeanspruchungen auf der Unterseite der Seitenwandabdeckung, wie sie bei Nickbewegungen auftreten, durch die federnde Lagerung des Arms in Achsrichtung zum Arm am Wagenkasten, aufgefangen werden können. Hierzu ist im Einzelnen vorgesehen, dass der Arm in einer Tasche verschieblich gelagert ist, wobei die Tasche mindestens eine Feder aufweist. Die Seitenwandabdeckung weist zu jeder Seite eine Haltevorrichtung auf. An jedem Ende der Seitenwandabdeckung ist die Haltevorrichtung über mindestens zwei Arme mit dem jeweiligen Wagenkasten verbunden. Jeder dieser Arme ist, wie bereits ausgeführt, an dem Wagenkasten elastisch nachgiebig gelagert, beispielsweise dadurch, dass der Arm in einer Tasche beweglich geführt ist, wobei die Tasche mindestens eine Feder aufweist, was insbesondere bei stauchender Beanspruchung der Seitenwandabdeckung dazu führt, dass der Arm in die jeweilige Tasche an dem Wagenkasten entgegen der darin angeordneten Feder eintaucht. Wird die Seitenwandabdeckung hingegen im oberen bzw. unteren Bereich im Einbauzustand auf Zug beansprucht, dann erfolgt dies ebenfalls entgegen der Kraft der in der Tasche angeordneten Feder, indem nämlich die Feder auf Zug beansprucht wird. Denkbar ist allerdings auch, die Feder nur bei Druck wirksam werden zu lassen, wobei hierdurch sichergestellt ist, dass die beiden Haltevorrichtungen durch die auf jeder Seite angeordneten federelastisch angeordneten Arme zentriert werden. Es wurde bereits darauf hingewiesen, dass die Seitenwandabdeckung insbesondere als mit Kunstharz getränktes Glasfasergewebe ausgebildet ist. In diesem Zusammenhang ist weiterhin vorgesehen, dass als Kunstharz Phenol-, Epoxid-, Polyesterharze oder Pu-Harz verwendet werden. Um die Seitenwandabdeckung flammhemmend auszubilden, ist als Flammschutzmittel Ammoniumpolyphosphat dem Kunstharz beigegeben. Die Elastizität einer solchermaßen aufgebauten Seitenwandabdeckung ist derart, dass sie auf den Rollkörper aufwickelbar bzw. aufrollbar ist.

Anhand der Zeichnungen wird die Erfindung nachstehend beispielhaft näher erläutert.
- Fig. 1: zeigt die erfindungsgemäße Seitenwandabdeckung mit einer Haltevorrichtung in einer perspektivischen Ansicht, wobei der Wagenkasten, an dem die Haltevorrichtung befestigt ist, lediglich angedeutet ist;

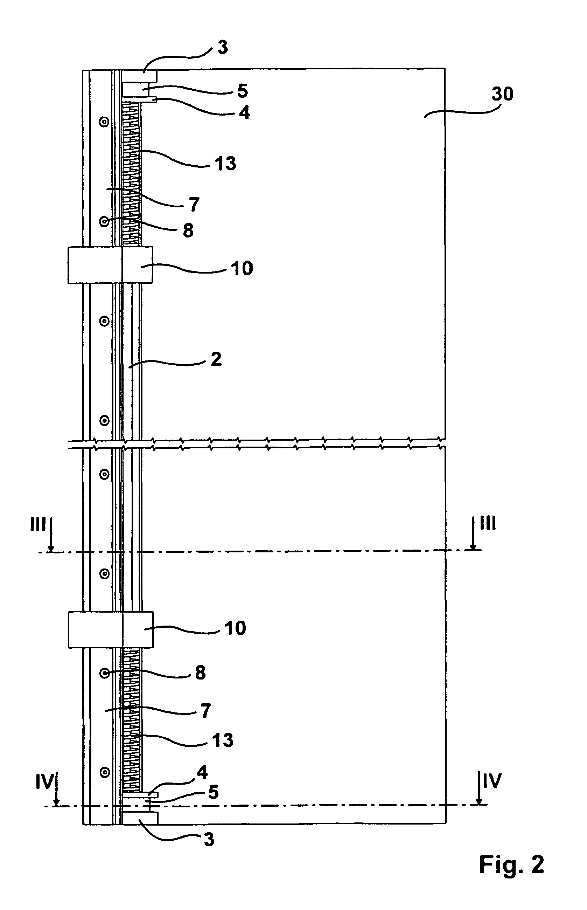

- Fig. 2: zeigt die Seitenwandabdeckung gemäß Fig. 1 in einer Seitenansicht;
- Fig. 3: zeigt einen Schnitt gemäß der Linie III-III aus Fig. 2;
- Fig. 4: zeigt einen Schnitt gemäß der Linie IV-IV aus Fig. 2;
- Fig. 5: zeigt eine abgewandelte Ausführungsform zu Fig. 1;
- Fig. 6: zeigt eine Ansicht gemäß der Linie VI-VI aus Fig. 3, wobei die Ansicht im Schnitt dargestellt ist.

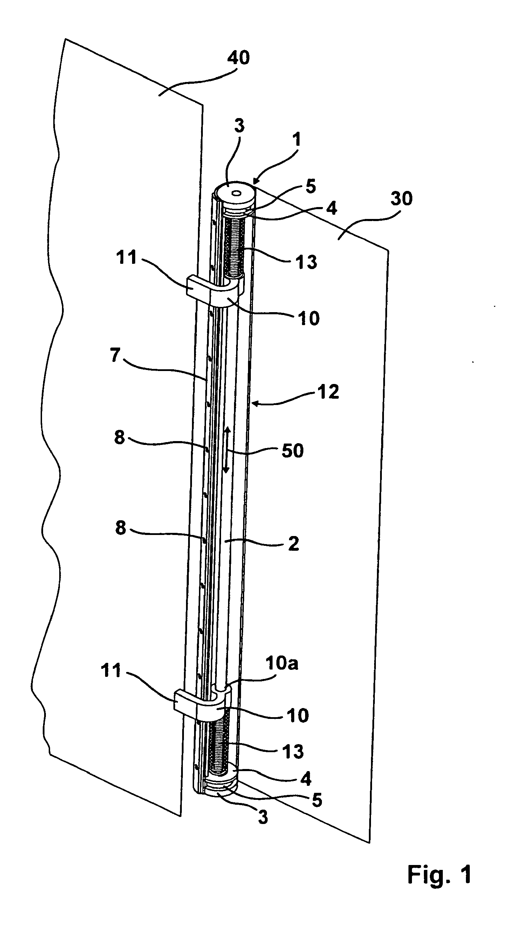

Aus der Darstellung gemäß Fig. 1 ist die insgesamt mit 1 bezeichnete Halterung erkennbar, wobei die Halterung die insgesamt mit 30 bezeichnete Seitenwandabdeckung aufnimmt. Die Seitenwandabdeckung 30 stellt sich als eine hochelastische Platte dar, die von der mit 1 bezeichneten Halterung aufwickelbar aufnehmbar ist.

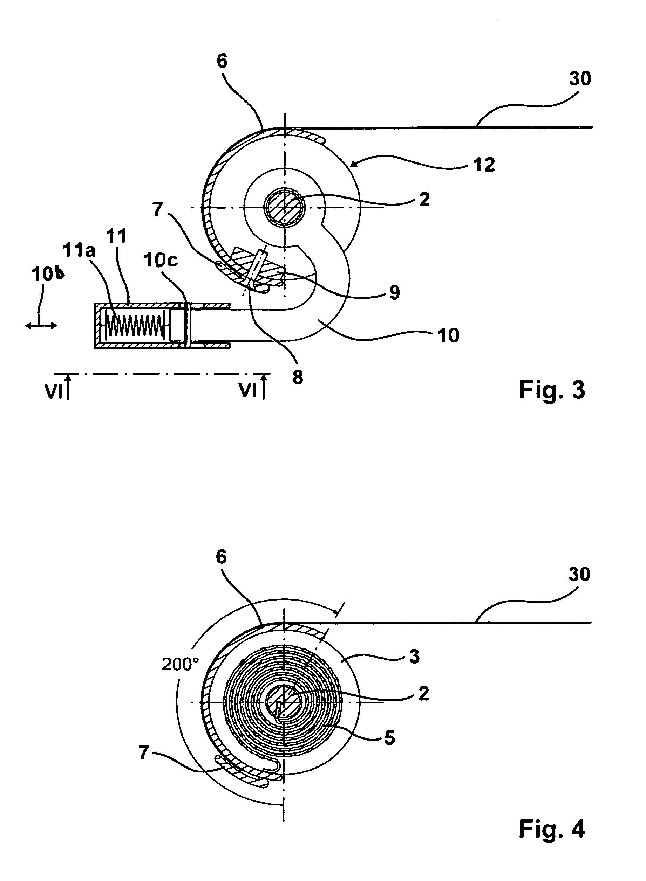

Hierzu ist die Halterung 1 wie folgt ausgebildet. Die Halterung 1 umfasst die Achse 2, wobei die Achse 2 endseitig jeweils zwei beabstandet zueinander angeordnete Teller 3, 4 aufweist, zwischen denen die Spiral- oder Schenkelfeder 5 gelagert ist, wie sich das im Einzelnen aus Fig. 4 ergibt. Hierbei ist die Schenkel- oder Spiralfeder 5 einerseits mit der Achse 2 verbunden, und andererseits mit dem Rollkörper 6, der nach Art einer Rohrschale ausgebildet ist, wie sich dies in Anschauung von Fig. 3, aber auch von Fig. 4 ergibt. Der Rollkörper 6 ist durch die Scheiben 3, 4 oder zumindest durch eine der Scheiben 3, 4 mit der Achse 2 insbesondere drehfest verbunden.

Auf dem Rollkörper 6 ist klemmbar die Seitenwandabdeckung 30 befestigt. Zur klemmbaren Aufnahme der Seitenwandabdeckung 30 ist die mit 7 bezeichnete Klemmlasche vorgesehen, die durch Schrauben 8 am Rollkörper 6 dadurch befestigt ist, dass auf der Innenseite des Rollkörpers 6 eine Gewindeleiste 9 vorgesehen ist, in die die Schrauben 8 eingreifen, wie sich dies in Anschauung von Fig. 3 ergibt. Der Rollkörper 6 weist als Rohrschale einen Umschlingungswinkel von ungefähr 200° auf, sodass sich eine fensterartige Öffnung 12 mit einer Weite von 160° ergibt. An der Achse 2 sind darüber hinaus beabstandet zueinander die beiden Arme 10 angeordnet, die stark gekröpft ausgebildet sind, wie sich dies insbesondere auch in Anschauung von Fig. 3 ergibt. Die Kröpfung ist hierbei derart gewählt, dass der Arm 10 unmittelbar aus der fensterartigen Öffnung 12 in dem Rollkörper 6 herausgeführt ist, und mit dem mit 40 angedeuteten Wagenkasten beispielsweise durch Schrauben (nicht dargestellt) in Verbindung steht. Zu beiden Seiten der Arme 10, die, wie bereits ausgeführt, beabstandet zueinander und verschieblich auf der Achse 2 angeordnet sind, befindet sich jeweils eine Druckfeder 13, die sich einerseits am Arm 10 abstützt und andererseits an als Anschlag fungierenden Tellern 3. Hieraus wird deutlich, dass bei einem Höhenversatz der gelenkig miteinander verbundenen Fahrzeuge die Achse 2 sich entlang des Doppelpfeiles 50 relativ zu den Armen 10 verschieben kann, wobei die Arme 10 jeweils ein Auge 10a zur verschieblichen Aufnahme der Achse 2 aufweisen. In dem Auge 10a ist die Achse 2 auch drehbar gelagert. Gehalten wird die Achse durch die als Anschläge ausgebildeten Teller 3, 4, an denen sich die zwischen den Armen 10 und den jeweiligen Teller 3, 4 angeordnete Druckfeder 13 abstützt (Fig. 1). Hieraus wird deutlich, dass die Seitenwandabdeckung 30 an dem Wagenkasten 40 durch die Arme 10 in Verbindung mit der Achse 2 und die Druckfedern 13 gehalten ist, wobei die Druckfeder zwischen dem jeweiligen Arm 10 und dem als Anschlag fungierenden Teller 4 lagert. Endseitig auf der Achse 10 befindet sich ein weiterer Teller 3, wobei zwischen Teller 3 und Teller 4 die Spiralfeder 5 angeordnet ist. Die Verbindung der Achse 2 mit dem Rollkörper 6 erfolgt durch mindestens einen der Teller 3, 4, wobei zwischen den Tellern 3, 4 sich die Spiralfeder 5 befindet, die für das Aufwickeln der Seitenwandabdeckung 30 sorgt.

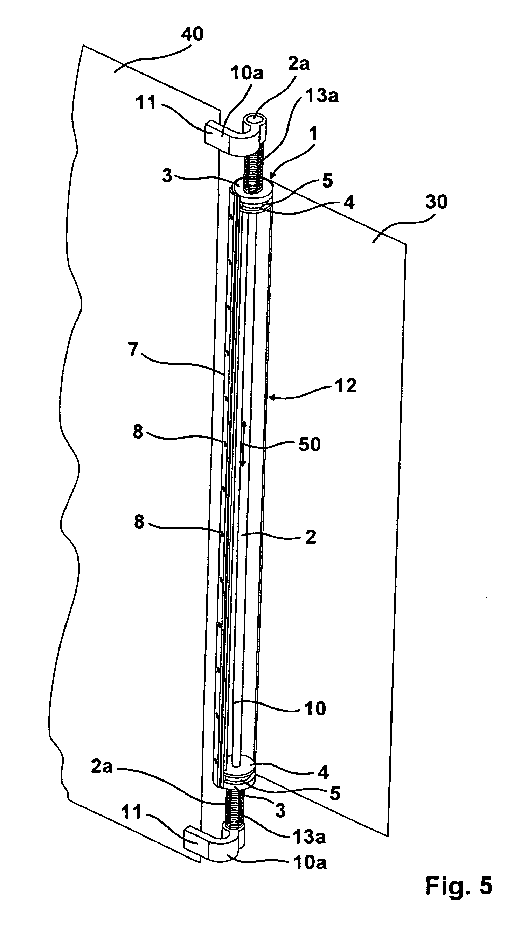

Bei der Darstellung gemäß Fig. 5 überragt die Achse 2 den Rollkörper 6 zu beiden Enden. Der hierdurch entstehende überstehende Achsenabschnitt 2a nimmt jeweils eine Druckfeder 13a auf, die sich einerseits am Teller 3 und andererseits am Arm 10 abstützt, der am Ende des Achsenabschnitts angeordnet ist. Der Arm 10 dient der Befestigung der Haltevorrichtung an dem jeweiligen Wagenkasten.

Der Vorteil dieser Variante besteht darin, dass der Rollkörper sich beliebig um die eigene Achse drehen kann, wobei dies in Abhängigkeit der von der Feder 5 aufgebrachten Vorspannkraft erfolgt.

Bei der anderen Ausführungsform, bei der die beiden Arme in dem als Rohrschale ausgebildeten Rollkörper an der Achse 2 angelenkt sind, ist der Drehwinkel eingeschränkt. Ein "Mehr" an Auszug der Seitenwandabdeckung ist nur durch eine Vergrößerung des Durchmessers des Rollkörpers möglich.

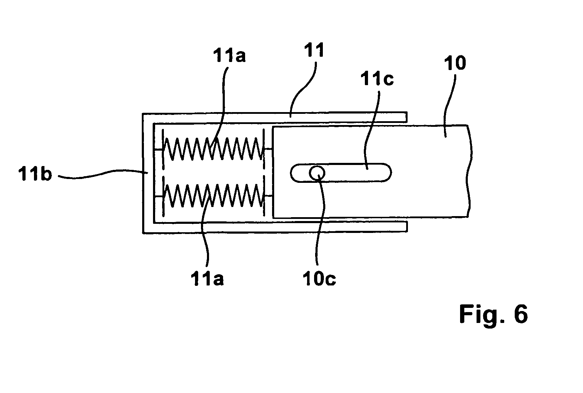

Wie sich aus der Darstellung gemäß Fig. 3 und Fig. 6 ergibt, ist der Arm 10 in einer Tasche 11 entgegen der Kraft einer Feder 11a elastisch nachgiebig in Achsrichtung des Arms (Pfeil 10b) gelagert. Die Tasche 11 ist in etwa rechteckig ausgebildet, wie sich dies auch in Anschauung von Fig. 6 ergibt. Insofern sind zwei parallel zueinander angeordnete Federn 11 a in der Tasche 11 angeordnet, wobei die beiden Federn 11a einerseits an der Stirnseite des Arms 10 und gegebenenfalls auch am Boden 11 b der Tasche 11 befestigt sind. Die Verbindungen können durch Schrauben bewerkstelligt sein. Um die Beweglichkeit des Arms 10 in der Tasche 11 zu begrenzen, ist in der Tasche 11 ein Langloch 11 c angeordnet, in das ein Stift 10c eingreift, der an dem Arm 10 befestigt ist.

## Patentansprüche

1. Wandabdeckung mit Haltevorrichtungen, welche auf der Innensei e eines Balges eines Überganges zwischen zwei gelenkig miteinander verbundenen Fahrzeugen angeordnet ist, wobei die Seitenwandabdeckung (30) durch zwei Haltevorrichtungen (1) gehalten ist, wobei jeweils eine Haltevorrichtung (1) an dem Wagenkasten (40) eines Fahrzeugs anordbar ist,
**dadurch gekennzeichnet,**
**dass** die Haltevorrichtung (1) die Seitenwandabdeckung (30) bei Verkürzung der Länge der Seitenwandabdeckung (30) bei Kurvenfahrt aufrollbar aufnimmt.

2. Wandabdeckung nach Anspruch 1,
**dadurch gekennzeichnet,**
**dass** die Haltevorrichtung (1) eine Achse (2) aufweist.

3. Wandabdeckung nach Anspruch 1,
**dadurch gekennzeichnet,**
**dass** die Achse (2) einen Rollkörper (6) zeigt, der relativ zur Achse (2) verdrehbar von der Achse (2) aufnehmbar ist.

4. Wandabdeckung nach einem der voranstehenden Ansprüche,
**dadurch gekennzeichnet,**
**dass** die Achse (2) mindestens einen Arm (10) zur Verbindung mit dem Wagenkasten (40) aufweist.

5. Wandabdeckung nach einem der voranstehenden Ansprüche,
**dadurch gekennzeichnet,**
**dass** der Arm (10) ein Auge (10a) für die verschiebliche Aufnahme der Achse (2) aufweist.

6. Wandabdeckung nach einem der voranstehenden Ansprüche,
**dadurch gekennzeichnet,**
**dass** die Achse (2) durch den Arm (10) entgegen der Kraft mindestens einer Feder (13) verschieblich gehalten ist.

7. Wandabdeckung nach einem der voranstehenden Ansprüche,
**dadurch gekennzeichnet,**
**dass** der Rollkörper (6) nach Art einer Rohrschale ausgebildet ist und parallel zur Achse (2) verschieblich durch die Achse (2) aufnehmbar ist.

8. Wandabdeckung nach einem der voranstehenden Ansprüche,
**dadurch gekennzeichnet,**
**dass** der Rollkörper (6) durch mindestens eine Spiral- oder Schenkelfeder (5) drehbar mit der Achse (2) in Verbindung steht.

9. Wandabdeckung nach einem der voranstehenden Ansprüche,
**dadurch gekennzeichnet,**
**dass** die Seitenwandabdeckung (30) am Rollkörper (6) klemmbar befestigt ist.

10. Wandabdeckung nach einem der voranstehenden Ansprüche,
**dadurch gekennzeichnet,**
**dass** der Rollkörper endseitig mindestens einen, vorzugsweise zwei Teller (3, 4) aufweist, wobei zwischen den Tellern (3, 4) die Spiral- oder Schenkelfeder (5) auf der Achse (2) lagert, wobei die Spiral- oder Schenkelfeder (5) mit ihrem einen Ende an der Achse (2) und mit ihrem anderen Ende an dem Rollkörper (6) angelenkt ist.

11. Wandabdeckung nach Anspruch 6,
**dadurch gekennzeichnet,**
**dass** durch den mindestens einen Teller (3, 4) die Achse (2) mit dem Rollkörper (6) verbunden ist.

12. Wandabdeckung nach einem der voranstehenden Ansprüche,
**dadurch gekennzeichnet,**
**dass** zumindest eine Haltevorrichtung (1) in Längsrichtung der Haltevorrichtung (1) verschieblich am Wagenkasten (40) befestigt ist.

13. Wandabdeckung nach einem der voranstehenden Ansprüche,
**dadurch gekennzeichnet,**
**dass** der zu beiden Enden der Achse (2) angeordnete innere Teller (4) jeweils als Anschlag für die als Druckfeder ausgebildete Feder (13) dient, wobei die jeweilige Druckfeder (13) am anderen Ende an dem jeweiligen Arm (10) anliegt, durch den die Haltevorrichtung (1) am Wagenkasten (40) befestigt ist.

14. Wandabdeckung nach einem der voranstehenden Ansprüche,
**dadurch gekennzeichnet,**
**dass** der Arm (10) zur Befestigung der Haltevorrichtung (1) am Wagenkasten (40) gekröpft ausgebildet ist, um eine Drehbewegung des Rollkörpers (6) um die Achse (2) zu ermöglichen.

15. Wandabdeckung nach einem der voranstehenden Ansprüche,
**dadurch gekennzeichnet,**
**dass** die Seitenwandabdeckung (30) derart elastisch ausgebildet ist, dass sie auf den Rollkörper (6) aufwickelbar ist.

16. Wandabdeckung nach einem der voranstehenden Ansprüche,
**dadurch gekennzeichnet,**
**dass** die Seitenwandabdeckung (30) zwischen den Haltevorrichtungen (1) vorgespannt gehalten ist.

17. Wandabdeckung nach einem der voranstehenden Ansprüche,
**dadurch gekennzeichnet,**
**dass** die Achse (2) zumindest an einem Ende über den Rollkörper (6) übersteht, wobei der überstehende Achsenabschnitt (2a) eine Feder (13a) aufweist, die einerseits an dem Arm (10) der Haltevorrichtung (1) und andererseits an dem Teller (3) anliegt.

18. Wandabdeckung nach Anspruch 17,
**dadurch gekennzeichnet,**
**dass** die Achse (2) zu beiden Enden über dem Rollkörper (6) übersteht, wobei der jeweilige überstehende Achsenabschnitt (2a) jeweils eine Feder (13a) aufnimmt.

19. Wandabdeckung nach Anspruch 17,
**dadurch gekennzeichnet,**
**dass** der Arm (10) am Ende des Achsenabschnitts (2a) angeordnet ist.

20. Wandabdeckung nach einem der voranstehenden Ansprüche,
**dadurch gekennzeichnet,**
**dass** der Arm (10) in Achsrichtung des Arms elastisch nachgiebig, insbesondere federnd an dem Fahrzeug gelagert ist.

21. Wandabdeckung nach Anspruch 20,
**dadurch gekennz.eichnet,**
dass der Arm (10) in einer an dem Fahrzeug angeordneten Tasche (11) verschieblich gelagert ist, wobei die Tasche mindestens eine Feder (11 a) aufweist.

22. Wandabdeckung nach Anspruch 21,
**dadurch gekennzeichnet,**
**dass** die relative Beweglichkeit des Arms (10) in der Tasche (11) begrenzt ist.

## Claims

1. A wall cover with holding devices, which are disposed on the inner side of a bellows of a gangway between two hinge-linked vehicles, wherein the side wall cover (30) is held by two holding devices (1), wherein respectively one holding device (1) is adapted to be disposed on the coach body (40) of a vehicle,
**characterized in that**
the holding device (1) receives the side wall cover (30) in such a manner that it can be rolled-up when the length of the side wall cover (30) shortens during travel around a curve.

2. The wall cover according to claim 1,
**characterized in that**
the holding device (1) has an axle (2).

3. The wall cover according to claim 1,
**characterized in that**
the axle (2) has a rolling body (6) which is receivable by the axle (2) so that it is rotatable relative to the axle (2).

4. The wall cover according to one of the afore-mentioned claims,
**characterized in that**
the axle (2) has at least one arm (10) for connection with the coach body (40).

5. The wall cover according to one of the afore-mentioned claims,
**characterized in that**
the arm (10) has an eye (10a) for displaceable reception of the axle (2).

6. The wall cover according to one of the afore-mentioned claims,
**characterized in that**
the axle (2) is held by the arm (10) to be displaceable against the force of at least one spring (13).

7. The wall cover according to one of the afore-mentioned claims,
**characterized in that**
the roll body (6) is constructed in the manner of a tube shell and is receivable by the axle (2) so as to be displaceable parallel to the axle (2).

8. The wall cover according to one of the afore-mentioned claims,
**characterized in that**
the roll body (6) is rotatably connected to the axle (2) by at least one spiral or leg spring (5).

9. The wall cover according to one of the afore-mentioned claims,
**characterized in that**
the side wall cover (30) is clampably fastened to the roll body (6).

10. The wall cover according to one of the afore-mentioned claims,
**characterized in that**
the roll body has at least one, preferably two discs (3, 4) at its end, wherein the spiral or leg spring (5) is mounted on the axle (2) between the discs (3, 4), wherein the spiral or leg spring (5) is articulated with its one end to the axle (2) and with its other end to the roll body (6).

11. The wall cover according to claim 6,
**characterized in that**
the axle (2) is connected to the roll body (6) by the at least one disc (3, 4).

12. The wall cover according to one of the afore-mentioned claims,
**characterized in that**
at least one holding device (1) is fastened on the coach body (40) so as to be displaceable in the longitudinal direction of the holding device (1).

13. The wall cover according to one of the afore-mentioned claims,
**characterized in that**
the inner disc (4) disposed at both ends of the axle (2) respectively serves as an limit stop for the spring (13) constructed as a pressure spring, wherein the respective pressure spring (13) rests at its other end on the respective arm (10) by way of which the holding device (1) is fastened on the coach body (40).

14. The wall cover according to one of the afore-mentioned claims,
**characterized in that**
the arm (10) for fastening the holding device (1) to the coach body (40) is constructed to be cranked, in order to allow for a rotational movement of the roll body (6) about the axle (2).

15. The wall cover according to one of the afore-mentioned claims,
**characterized in that**
the side wall cover (30) is constructed elastically so that it is adapted to be wound up on the roll body (6).

16. The wall cover according to one of the afore-mentioned claims,
**characterized in that**
the side wall cover (30) is held in a pre-tensioned manner between the holding devices (1).

17. The wall cover according to one of the afore-mentioned claims,
**characterized in that**
the axle (2) protrudes at least at one end beyond the roll body (6), wherein the protruding section of the axle (2a) has a spring (13a) that rests against the arm (10) of the holding device (1) on the one hand and on the disc (3) on the other hand.

18. The wall cover according to claim 17,
**characterized in that**
the axle (2) protrudes at both ends beyond the roll body (6), wherein the respectively protruding section of the axle (2a) receives respectively one spring (13a).

19. The wall cover according to claim 17,
**characterized in that**
the arm (10) is disposed at the end of the section of the axle (2a).

20. The wall cover according to one of the afore-mentioned claims,
**characterized in that**
the arm (10) is mounted on the vehicle so as to be elastically yielding, more specifically resilient in the axial direction of the arm.

21. The wall cover according to claim 20,
**characterized in that**
the arm (10) is displaceably mounted in a pocket (11) disposed on the vehicle, wherein the pocket has at least one spring (11 a).

22. The wall cover according to claim 21,
**characterized in that**
the relative mobility of the arm (10) in the pocket (11) is limited.

## Revendications

1. Couverture de paroi avec des installations de maintien, qui est montée sur la face intérieure d'un soufflet d'un passage intermédiaire entre deux véhicules articulés reliés entre eux, la couverture de paroi (30) étant maintenue par deux installations de maintien (1), dans laquelle respectivement une installation de maintien (1) est montée sur la carrosserie (40) d'un des véhicules,
**caractérisée en ce que,**
l'installation de maintien (1) est agencée pour recevoir la couverture de paroi (30) sous forme enroulée, lors d'un raccourcissement de la longueur de la couverture de la paroi latérale (30) résultant d'une circulation du véhicule dans un virage,

2. Couverture de paroi selon la revendication 1,
**caractérisée en ce que,**
l'installation de maintien (1) comporte un axe (2).

3. Couverture de paroi selon la revendication 1,
**caractérisée en ce que,**
l'axe (2) présente un élément courbe (6) qui est monté sur ledit axe (2) et peut tourner relativement à cet axe (2).

4. Couverture de paroi, selon l'une des revendications précédentes,
**caractérisée en ce que,**
l'axe (2) comprend au moins un bras (10) pour assurer la liaison avec la carrosserie (40) du véhicule.

5. Couverture de paroi, selon l'une des revendications précédentes,
**caractérisée en ce que,**
le bras (10) comporte une ouverture (10a) pour recevoir l'axe (2) et permettre son coulissement.

6. Couverture de paroi, selon l'une des revendications précédentes,
**caractérisée en ce que,**
l'axe (2) est maintenu coulissant par le bras (10) à l'encontre da la force d'au moins un ressort (13).

7. Couverture de paroi, selon l'une des revendications précédentes,
**caractérisée en ce que,**
l'élément courbe (6) est configuré sous la forme d'une coquille mobile en coulissement parallèlement à l'axe (2) et pouvant être réceptionnée par l'axe (2).

8. Couverture de paroi, selon l'une des revendications précédentes,
**caractérisée en ce que,**
l'élément courbe (6) est couplé en rotation avec l'axe (2) au moyen d'au moins un ressort spirale ou un ressort à branches (5).

9. Couverture de paroi, selon l'une des revendications précédentes,
**caractérisée en ce que,**
la couverture de paroi latérale (30) est fixée par pincement à l'élément courbe (6).

10. Couverture de paroi, selon l'une des revendications précédentes,
**caractérisée en ce que,**
l'élément courbe (6) comporte d'un coté, au moins un et de préférence deux assiettes (3, 4), le ressort spirale ou le ressort à branches (5) étant monté sur l'axe (2) entre les assiettes (3, 4), le ressort spirale ou le ressort à branches (5) étant fixé par une de ses extrémités à l'axe (2) et par son autre extrémité à l'élément courbe (6).

11. Couverture de paroi selon la revendication 6,
**caractérisée en ce que,**
l'axe (2) est lié à l'élément courbe (6) par au moins une assiette (3, 4).

12. Couverture de paroi, selon l'une des revendications précédentes,
**caractérisée en ce que,**
au moins une installation de maintien (1) est mobile en coulissement dans le sens longitudinal de l'installation de maintien (1) et fixée à la carrosserie (40) du véhicule.

13. Couverture de paroi, selon l'une des revendications précédentes,
**caractérisée en ce que,**
l'assiette intérieure (4) fixée aux deux extrémités de l'axe (2) sert d'appui au ressort (13) constitué comme un ressort d'appui, dans laquelle le ressort d'appui (13) correspondant est en appui avec le bras correspondant (10) à son autre extrémité, qui permet la fixation de l'installation de maintien (1) à la carrosserie (40) du véhicule.

14. Couverture de paroi, selon l'une des revendications précédentes,
**caractérisée en ce que,**
le bras (10) permettant la fixation de l'installation de maintien (1) à la carrosserie (40) du véhicule est coudé pour permettre un mouvement de pivotement de l'élément courbe (6) autour de l'axe (2).

15. Couverture de paroi, selon l'une des revendications précédentes,
**caractérisée en ce que,**
la couverture de paroi latérale (30) a une consistance élastique telle qu'elle puisse être embobinée sur l'élément courbe (6).

16. Couverture de paroi, selon l'une des revendications précédentes,
**caractérisée en ce que,**
la couverture de paroi latérale (30) est maintenue pré-tendue entre les installations de maintien (1).

17. Couverture de paroi, selon l'une des revendications précédentes,
**caractérisée en ce que,**
l'axe (2) dépasse l'élément courbe (6) au moins à une de ses extrémités, dans laquelle la section (2a) de l'axe qui dépasse comprend un ressort (13a) qui est d'une part en appui contre le bras (10) de l'installation de maintien (1) et d'autre part contre l'assiette (3).

18. Couverture de paroi, selon la revendication 17,
**caractérisée en ce que,**
l'axe (2) dépasse aux deux extrémités l'élément courbe (6), dans laquelle le tronçon d'axe (2a) qui dépasse porte respectivement un ressort (13a).

19. Couverture de paroi, selon l'une des revendications précédentes,
**caractérisée en ce que,**
le bras (10) est monté à l'extrémité du tronçon final (2a) de l'axe.

20. Couverture de paroi, selon l'une des revendications précédentes,
**caractérisée en ce que,**
le bras (10) cède élastiquement dans la direction de l'axe, en particulier il est monté élastiquement sur le véhicule.

21. Couverture de paroi, selon la revendication 20,
**caractérisée en ce que,**
le bras (10) est monté coulissant dans une poche (11) ménagée sur le véhicule, dans laquelle la poche comporte au moins un ressort (11 a).

22. Couverture de paroi, selon la revendication 21,
**caractérisée en ce que,**
le mouvement relatif du bras (10) dans la poche (11) est limité.
